# EUROPEAN PATENT SPECIFICATION

(11) **EP 0 302 653 B1**
(45) Date of publication and mention of the grant of the patent: **15.09.1993**
(21) Application number: 88306901.5
(22) Date of filing: 27.07.1988
(51) Int. Cl.: H04N 3/12, G02F 1/133

(54) **Colour display**
Farbeanzeige
Ecran coloré

(30) Priority: 06.08.1987 JP 195435/87
(43) Date of publication of application: 08.02.1989
(73) Proprietor: International Business Machines Corporation, Armonk, N.Y. 10504 (US)
(72) Inventor: Yamaguchi, Hidefumi, Fujisawa-shi Kanagawa-ken (JP)
(74) Representative: Burt, Roger James, Dr.

(56) References cited:
- DE-U- 8 512 243
- GB-A- 2 133 912
- US-A- 4 079 411
- CONFERENCE RECORD OF THE 1985 INTERNATIONAL DISPLAY RESEARCH CONFERENCE, 1985, pages 24-26, IEEE, New York, US; S. TSURUTA et al.: "Color pixel arrangement evaluation for LC-TV"
- PATENT ABSTRACTS OF JAPAN, vol. 11, no. 114 (P-574)[2591], 12th May 1987; & JP-A-61 282 823

## Description

This invention relates to a colour display having recurrently arrayed picture elements of three different colours, which can be driven independently.

Heretofore, displaying colours has been performed by arranging picture elements of three different colours, i.e. red, green and blue picture elements, on a display panel, and by controlling the light transmission or light emission of each picture element. More precisely, a display element consists of red, green and blue picture elements adjacent to each other. For example, when only the red picture element is in the light transmission (or emission) mode, red is displayed, and when only red and blue picture elements are in the light transmission (or emission) mode, purple is displayed.

Various arrangements of the red, green and blue picture elements have been proposed. These prior arrangements will be discussed with reference to Figs. 9 to 14 of the accompanying drawings, in which:
Fig. 9 is a schematic diagram of a known colour picture element array;
Fig. 10 is a schematic diagram of another known colour picture element array.
Fig. 11 is a schematic diagram of a further known colour picture element array;
Fig. 12 is a pattern display diagram showing character patterns produced when display is made by picture elements of a single colour on a colour display having the colour element array shown in Fig. 9;
Fig. 13 is a pattern display diagram showing character patterns produced when display is made by picture elements of a single colour on a colour display having the colour element array shown in Fig. 10; and
Fig. 14 is a pattern display diagram showing character patterns produced when display is made by picture elements of a single colour on a colour display having the colour element array shown in Fig. 11.

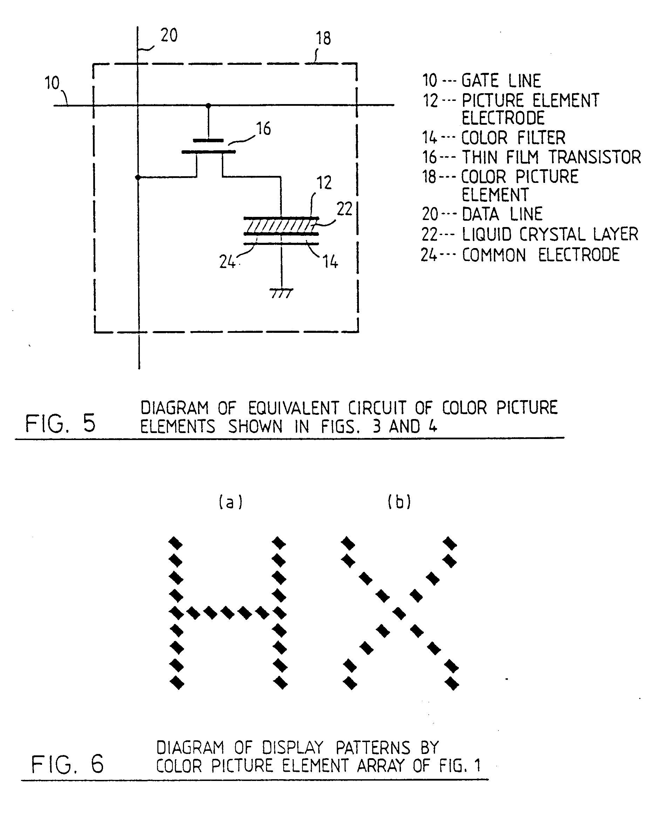

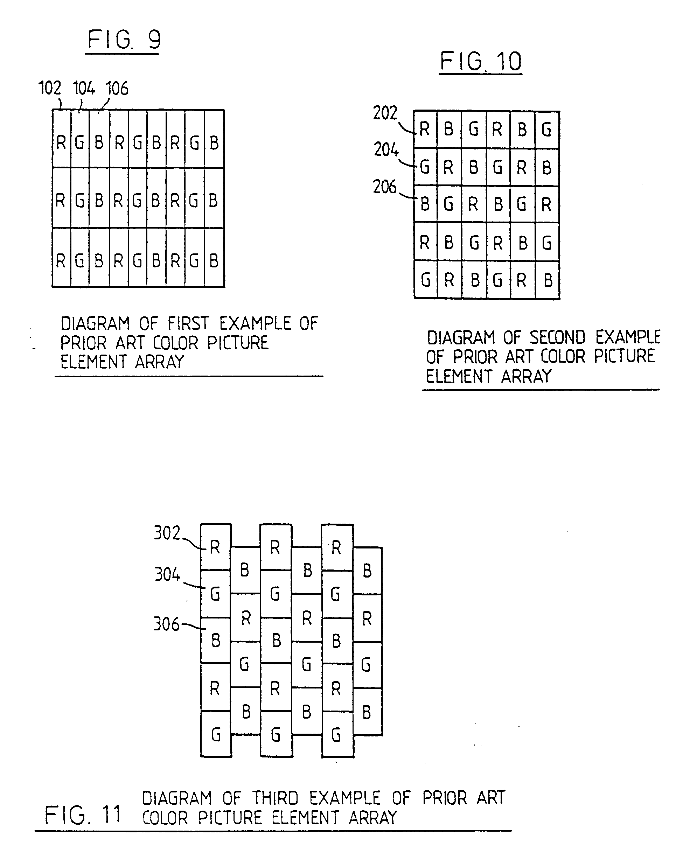

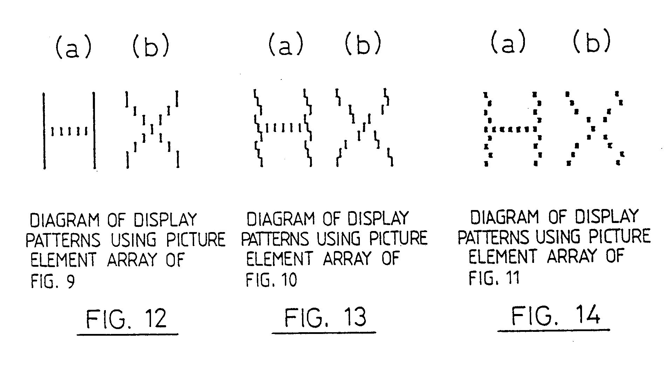

Fig. 9 shows a colour picture element array disclosed in Fig. 5 of Japanese Published Unexamined Patent Application JP-A-54-14119 (14119/79) (Application No. 52-80324 (80324/77)), and Japanese Published Unexamined Patent Application JP-A-54-84997 (84997/79) (Application No. 53-117884 (117884/78)). This has groups of three picture element columns arranged sequentially and recurrently with only red picture elements 102 in the first column, only green picture elements 104 in the second column and only blue picture elements (106) in the third column.

Fig. 10 shows a colour picture element array disclosed in Fig. 9 of Japanese Published Unexamined Patent Application JP-A-61-53684 (53684/86) (Application No. 59-175703 (175703/84)). In this array, picture element columns, each of which consists of alternate red, green and blue picture elements 202, 204 and 206 in the vertical direction, are shifted by the length of a picture element relative to the adjacent column so that there is a sequence of red, green and blue picture elements 202, 204 and 206 in the diagonal direction.

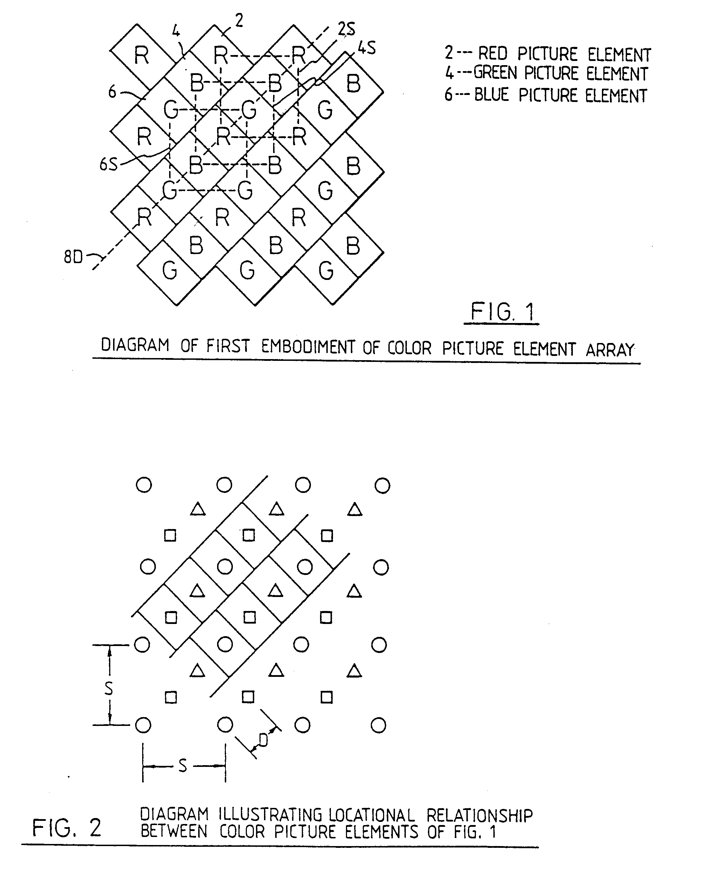

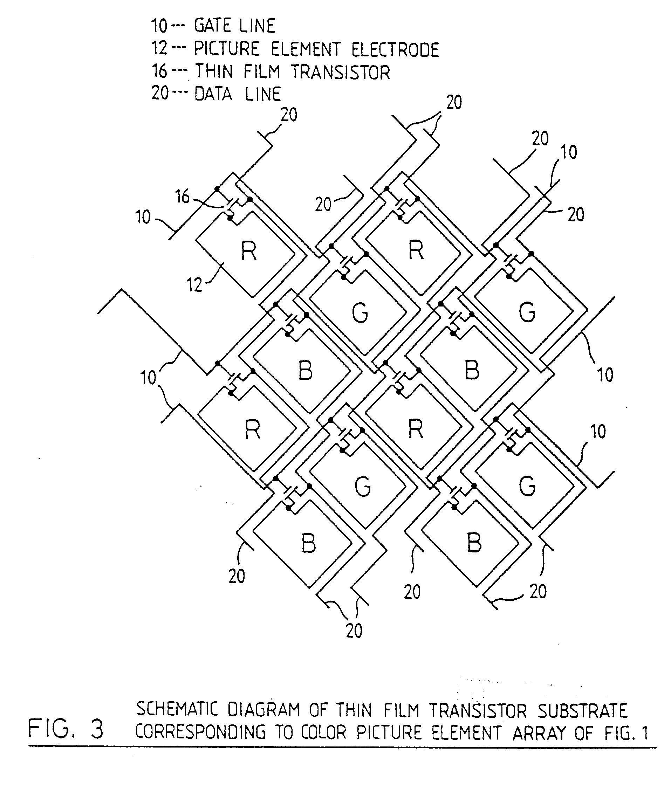

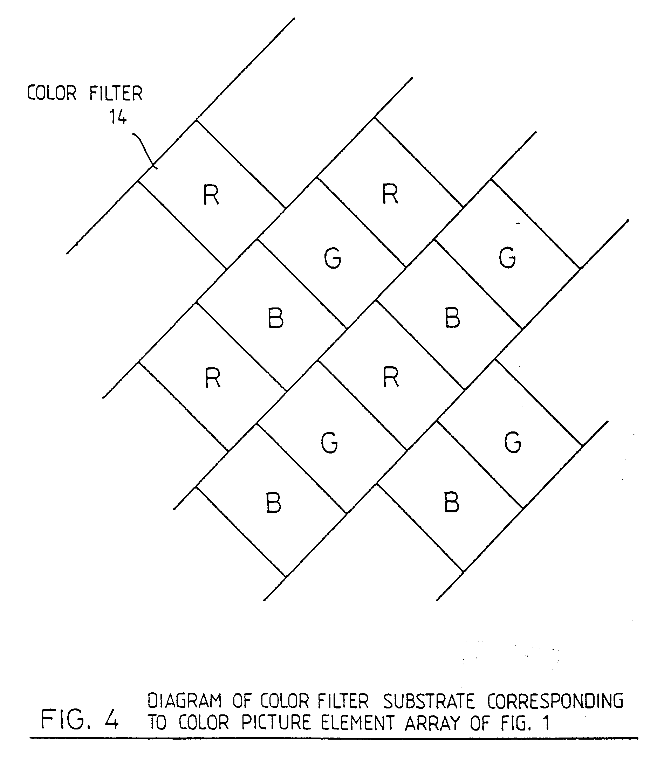

Fig. 11 shows a colour picture element array disclosed in Fig. 1 of the aforementioned Published Unexamined Patent Application JP-A-61-53684 (53684/86) and Fig. 2 of Japanese Published Unexamined Patent Application JP-A-59-9636 (9636/84) (Application No. 57-118258 (118258/82)). In this array, alternate columns each consisting of a sequence of red, green and blue picture elements 302, 304 and 306 are shifted by the length of 1.5 picture elements in the vertical direction relative to each other.

When monochromatic displaying of red, green or blue is performed using the known colour picture element array shown in Fig. 9, although a vertical line is continuous as shown in Fig. 12, both a horizontal line (Fig. 12 (a)) and an oblique line (Fig. 12 (b)) become coarse broken lines. Also, if a large area is displayed as white (i.e., red, green and blue picture elements are all in the light transmission mode), vertical stripes are seen.

When monochromic displaying of red, green or blue is performed using the prior picture element array shown in Fig. 10, a vertical line becomes a set of oblique lines and a horizontal line becomes a broken line as shown in Fig. 13 (a). Also, as Fig. 13 (b) shows, an oblique line slanting to the left has a different display pattern from an oblique line slanting to the right.

When monochromic displaying of red, green or blue is performed using the known picture element array shown in Fig. 11, although a horizontal line is denser than those obtained using either of the colour picture element arrays of Figs. 9 and 10, a vertical line is of zigzag form as shown in Fig. 14 (a). Also, as Fig. 14 (b) shows, an oblique line slanting to the left has a different display pattern from an oblique line slanting to the right.

This invention seeks to provide a colour display which can have almost the same display quality for horizontal, vertical and oblique lines when colour displaying is performed using any one of three picture elements of different colours, and no stripes are seen even if three picture elements of different colours are all in the light transmitting or emitting mode.

A colour display according to the present invention is defined in claim 1.

How the invention can be carried out will now be described by way of example, with reference to the accompanying drawings, in which:-
Fig. 1 is a schematic diagram of the colour picture element array of a colour display embodying the invention;
Fig. 2 is a diagram illustrating the locational relationship between picture elements of the picture element array shown in Fig. 1;
Fig. 3 is a schematic diagram showing a part of the thin film transistor substrate of a colour liquid crystal display using the picture element array of Fig. 1;
Fig. 4 is a schematic diagram showing a part of the colour filter substrate provided facing the thin film transistor substrate of Fig. 3;
Fig. 5 is an equivalent circuit diagram of a picture element in the colour liquid crystal display which is constructed by the substrates shown in Figs. 3 and 4;
Fig. 6 is a pattern display diagram showing character patterns produced when display is made by picture elements of a single colour on a colour display having the colour element array shown in Fig. 1;

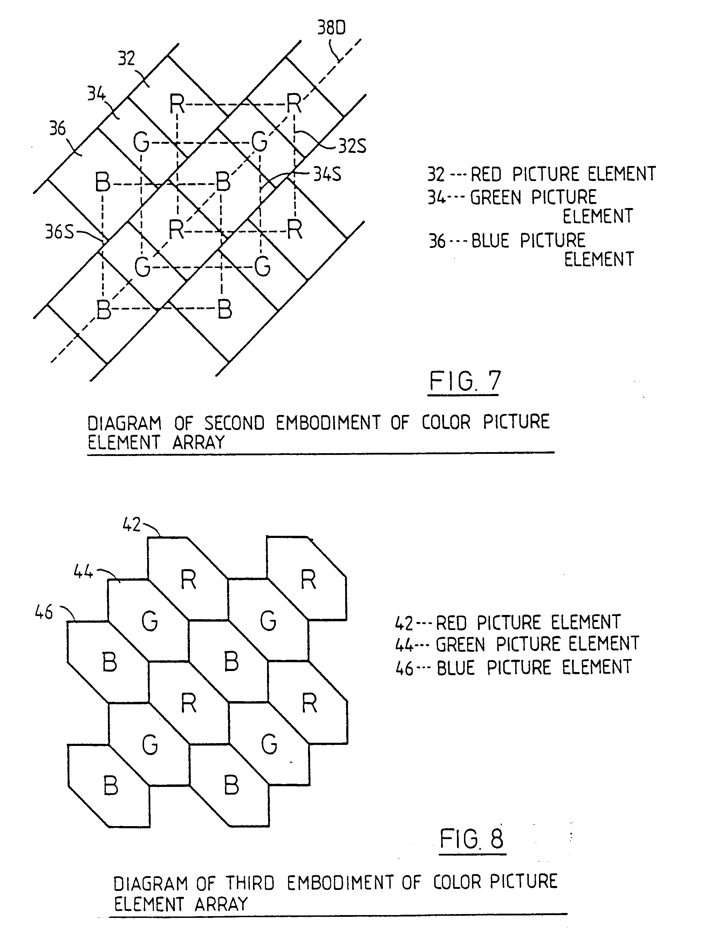

Fig. 7 is a schematic diagram of another colour picture element array embodying the invention; and
Fig. 8 is a schematic diagram of a further colour picture element array embodying the invention.

Fig. 1 shows the colour picture element array of one colour display embodying the invention. In this embodiment, red picture elements 2, green picture elements 4 and blue picture elements 6 are so arranged along the line 8D as to be centred on the corners of squares 2S, 4S and 6S, respectively. The squares 2S, 4S and 6S are of the same size, and the directions of their diagonals coincide with each other and in the direction of the line 8D. The line 8D extends in the direction of 45° from the horizontal direction.

As described above, since the red, green and blue picture elements 2, 4 and 6 are centred on the corners of the squares 2S, 4S and 6S of the same size, the distances in the horizontal and vertical directions between the red pictures elements 2, between the green picture elements 4 and between the blue picture elements 6 are the same.

Fig. 2 shows the distances between the centres of the picture elements of the embodiment shown in Fig. 1. In Fig. 2, small circles, squares and triangles indicate the centres of the red, green and blue picture elements 2, 4 and 6, respectively. The distance S in the horizontal and vertical directions between (the centres of) picture elements of the same colour is related to the distance D between (the centres of) adjacent picture elements of different colour and arrayed in the direction of 45° from the horizontal direction, as follows:

$\text{S : D = 3 : √2}$

If all the picture elements are rectangular and of the same size, the two opposite sides of a picture element are in the direction of 45° from the horizontal direction, and the distance between a picture element arranged in a picture element array in the direction of 45° from the horizontal direction and a picture element of the same colour on the adjacent picture element array is 1.5 picture elements.

If the ratio of the lengths of different sides of a rectangular picture element is 3:2, picture elements can be allocated to the whole screen without leaving vacant spaces.

Fig. 3 shows schematically a part of a substrate for thin film transistors when the picture element array of Fig. 1 is applied to a colour liquid crystal display of a switching element lamination system, and Fig. 4 shows a part of a colour filter substrate disposed parallel to the thin film transistor substrate of Fig. 3 so as to cover the transistor substrate. The space between the thin film transistor substrate shown in Fig. 3 and the colour filter substrate shown in Fig. 4 is filled with a liquid crystal. A transparent common electrode (not shown) entirely covers the colour filter substrate.

Each picture element has a transparent picture element electrode 12; a colour filter 14 facing the picture element electrode 12 across the liquid crystal; and a thin film transistor 16 whose gate is connected to the gate line (scanning line) 10, whose drain is connected to the data line (signal line) 20, and whose source is connected to the transparent electrode 12. The colour filter 14 includes a red filter which transmits only red light for a red picture element, a green filter which transmits only green light for a green picture element, and a blue filter which transmits only blue light for a blue picture element. In Fig. 4, R, G and B represent red, green and blue filters, respectively. The thin film transistor substrate and the colour filter substrate are so constructed that each picture element electrode 12 is aligned with the corresponding colour filter 14. In Fig. 3, although a plurality of gate lines have the same reference number 10, and a plurality of data lines have the same reference number 20, each gate line 10 and data line 20 can be driven independently, and consequently, each picture element can be driven independently.

Fig. 5 shows an equivalent circuit of one picture element of the colour liquid crystal display shown in Figs. 3 and 4. In Fig. 5, the same reference numbers are given to the same components of Figs. 3 and 4. In Fig. 5, the reference numbers 18, 22 and 24 designate a colour picture element, a liquid crystal layer and a common transparent electrode respectively.

Next, the operation of the colour liquid crystal display shown in Figs. 3, 4 and 5 will be described. First, a data voltage is applied to each data line 20 separately, then a gate voltage is applied to the first gate line 10 to turn all the thin film transistors connected to this gate line on, and to place the liquid crystal layer 22 of each picture element in the light transmission or light shielding condition. Then, the voltage on the first gate line 10 is removed, and a data voltage is applied to each data line 20 separately and in the same manner as in the above case. A gate voltage is then applied to the second gate line 10. Even if the gate and data voltages are removed, the data voltage (accurately, the charge corresponding to the data voltage) is accumulated in the liquid crystal layer 22 with little attenuation, and the display such as a still picture can be obtained.

Figs. 6 (a) and 6 (b) shows "H" and "X" monochromatically displayed in red, green or blue by the colour display using the colour picture element array shown in Fig. 1, for example, represented by the colour liquid crystal display shown in Figs. 3, 4 and 5. As these figures show, the display quality of horizontal, vertical and oblique lines can be made almost the same.

Although the distance between (the centres of) picture elements of different colours arrayed in the direction of 45°from the horizontal direction is the same and the size of the picture elements is also the same in the above embodiment, these are not necessarily the same. For example, as Fig. 7 shows, the area of the blue picture elements, which have low brightness, can be increased, and the area of the green picture elements, which have high brightness, can be decreased. (In this case, the distance between centres of green and blue picture elements 34 and 36 is increased, and the distance between centres of green and red picture elements 34 and 32 is decreased.) However, red, green and blue picture elements 32, 34 and 36 must be arranged in the direction of line 38D so that they are centred on the corners of the squares 32S, 34S and 36S whose diagonals all lie along the line 38D.

If three squares at the corners of which red, green and blue picture elements are centred are the same such as the squares 2S, 4S and 6S shown in Fig. 1 and the squares 32S, 34S and 36S shown in Fig. 7, the display quality of lines can be uniform regardless of colours even if characters or patterns on different locations are displayed as red, green or blue. In monochromatic display, however, since display is usually made in either one colour of red, green or blue, the sizes of three squares at the corners of which red, green and blue picture elements are positioned may be different from each other. That is, as long as picture elements of the same colour are positioned at the corners of squares, the distances between these colour elements in horizontal and vertical directions are the same, and the distance in the diagonal direction is only √2 times the distance in horizontal and vertical directions. Therefore, display by the picture element of the same colour is visually recognized to have horizontal, vertical and diagonal lines of the same quality.

The rectangle at the corners of which the colour picture elements are centred does not need to be geometrically square.

Although it is preferable that the picture elements are of rectangular shape in view of the effective area of a picture element being large and of gate and data line wiring being easy, the shape is not limited to rectangular, but may be of various shapes; for example, as shown in Fig. 8, red, green and blue picture elements 42, 44 and 46 may be hexagonal.

Although the embodiment shown in Figs. 3, 4 and 5 relates to a liquid crystal display using thin film transistors as switching elements, the invention can be applied to a liquid crystal display using other non-linear switching elements such as thin film diodes.

Furthermore, application of the invention is not limited to liquid crystal displays, as it can be applied to other colour displays such as electrochromic displays. In summary, the invention can be applied to any type of display having three types of colour picture elements of colours which are different from each other. The colours of the picture elements are not limited to red, green and blue.

Since the picture elements are uniformly dispersed, no stripes are seen even if all the colour picture elements of the three different colours are in light transmitting or light emitting conditions.

## Claims

1. A colour display in the form of a 2-dimensional array of identical groups of picture elements, the dimensions of the array extending in a horizontal and a vertical direction, each each recurrently arrayed group comprising picture elements (2, 4, 6) of different first, second and third colours, each picture element being capable of being independently driven, characterised in that the picture elements (2, 4, 6) of the first, second and third colours are centred on the corners of individual first, second and third overlapping rectangles (2S, 4S, 6S), each of the three rectangles having a diagonal lying along a common line (8D).

2. A colour display as claimed in claim 1, wherein the common line lies at 45 degrees to the horizontal.

3. A colour display as claimed in claim 1 or claim 2, wherein the first, second and third rectangles are squares.

4. A colour display as claimed in any preceding claim, wherein the colour picture elements are all of the same shape.

5. A colour display as claimed in claim 4, wherein the following relationship is satisfied:
$\text{S : D = 3 : √2}$
where S is the horizontal or vertical distance between the centres of two adjacent picture elements of the same colour and D is the distance between the centres of two adjacent picture elements of different colours along a line at 45 degrees to the horizontal.

6. A colour display as claimed in claim 5, wherein each of the colour picture elements is rectangular, the sides of which lie at 45 degrees to the horizontal.

7. A colour display as claimed in claim 6, wherein the ratio of the longer side to the shorter side of the rectangles is 3:2.

8. A colour display as claimed in claim 1 or claim 2, wherein the size of the picture elements of one colour is different from the size of the picture elements of the other two colours.

9. A colour display as claimed in any one of the preceding claims, wherein the first, second and third colours are red, green and blue, respectively.

10. A colour display as claimed in any one of the preceding claims, wherein each of the picture elements includes a colour filter of appropriate colour.

## Patentansprüche

1. Eine Farbeanzeige in Form eines zweidimensionalen Rasters von identischen Gruppen von Bildelementen, dessen Abmessungen sich in horizontaler und vertikaler Richtung erstrecken, wobei jede wiederkehrend rasterförmig angeordnete Gruppe Bildelemente (2, 4, 6) von verschiedenen ersten, zweiten und dritten Farben enthält und jedes Bildelement fähig ist, unabhängig gesteuert zu werden, dadurch gekennzeichnet, daß die Bildelemente (2, 4, 6) der ersten, zweiten und dritten Farben an den Ecken von einzelnen, ersten, zweiten und dritten überlappenden Rechtecken (2S, 4S, 6S) zentriert sind, wobei jedes der drei Rechtecke eine Diagonale aufweist, die entlang einer gemeinsamen Linie (8D) verläuft.

2. Eine Farbeanzeige wie in Anspruch 1, wobei die gemeinsame Linie bei 45 Grad im Verhältnis zur der horizontalen liegt.

3. Eine Farbeanzeige wie in Anspruch 1 oder Anspruch 2, wobei die ersten, zweiten und dritten Rechtecke Quadrate sind.

4. Eine Farbeanzeige wie in irgendeinem vorhergehenden Anspruch, wobei die Farbbildelemente alle die gleiche Form haben.

5. Eine Farbeanzeige wie in Anspruch 4, wobei das folgende Verhältnis erfüllt wird:
$\text{S : D = 3 : √2}$
wo S die horizontale oder vertikale Entfernung zwischen den Zentren von zwei aneinandergrenzenden Bildelementen der gleichen Farbe und D die Entfernung zwischen den Zentren von zwei aneinandergrenzenden, verschiedenfarbigen Bildelemente entlang einer Linie bei 45° im Verhältnis zu der horizontalen Linie ist.

6. Eine Farbeanzeige wie in Anspruch 5, wobei jedes Farbbildelement rechteckig ist, dessen Seiten bei 45° im Verhältnis zu der horizontalen Linie liegen.

7. Eine Farbeanzeige wie in Anspruch 6, wobei das Verhältnis der längeren Seite zur kürzeren Seite der Rechtecke 3:2 beträgt.

8. Eine Farbeanzeige wie in Anspruch 1 oder Anspruch 2, wobei sich die Größe der Bildelemente von einer Farbe von der Größe des Bildelements der anderen beiden Farben unterscheidet.

9. Eine Farbeanzeige wie in irgendeinem der vorhergehenden Ansprüche, wobei die erste, zweite und dritte Farbe rot, grün bzw. blau ist.

10. Eine Farbeanzeige wie in irgendeinem der vorhergehenden Ansprüche, wobei jedes der Bildelemente einen Farbfilter von entsprechender Farbe enthält.

## Revendications

1. Ecran coloré sous la forme d'un agencement bidimensionnel de groupes identiques d'éléments d'image, les dimensions de l'agencement s'étendant dans une direction horizontale et une direction verticale, chaque groupe agencé de façon récurrente comprenant des éléments d'image (2,4,6) d'une première, d'une deuxième et d'une troisième couleurs, chaque élément d'image pouvant être excité de façon indépendante, caractérisé en ce que les éléments d'image (2,4,6) des première, deuxième et troisième couleurs sont centrés sur les angles d'un premier, d'un deuxième et d'un troisième rectangles individuels en chevauchement (2S,4S,6S), chacun des trois rectangles ayant une diagonale s'étendant le long d'une ligne commune (8D).

2. Ecran coloré suivant la revendication 1, dans lequel la ligne commune est inclinée à 45° par rapport à l'horizontale.

3. Ecran coloré suivant la revendication 1 ou la revendication 2, dans lequel les premier, deuxième et troisième rectangle sont des carrés.

4. Ecran coloré suivant l'une quelconque des revendications précédentes, dans lequel les éléments d'image en couleur sont tous de la même forme.

5. Ecran coloré suivant la revendication 4, dans lequel la relation suivante est satisfaite :
$\text{S : D = 3 : √2}$
où S est la distance horizontale ou verticale entre les centres de deux éléments d'image adjacents de la même couleur et D est la distance entre les centres de deux éléments d'image adjacents de couleurs différentes le long d'une ligne inclinée à 45° par rapport à l'horizontale.

6. Ecran coloré suivant la revendication 5, dans lequel chacun des éléments d'image en couleur est rectangulaire, les côtés du rectangle étant inclinés à 45° par rapport à l'horizontale.

7. Ecran coloré suivant la revendication 6, dans lequel le rapport du grand côté au petit côté des rectangles est de 3:2.

8. Ecran coloré suivant la revendication 1 ou la revendication 2, dans lequel la dimension des éléments d'image d'une couleur diffère de la dimension des éléments d'image des deux autres couleurs.

9. Ecran coloré suivant l'une quelconque des revendications précédentes, dans lequel les première, deuxième et troisième couleurs sont le rouge, le vert et le bleu, respectivement.

10. Ecran coloré suivant l'une quelconque des revendications précédentes, dans lequel chacun des éléments d'image comprend un filtre de couleur ayant la couleur appropriée.
